# EUROPEAN PATENT APPLICATION

(11) **EP 4 722 052 A1**
(43) Date of publication of application: **08.04.2026**
(21) Application number: 24205034.2
(22) Date of filing: 07.10.2024
(51) Int. Cl.: B60S 1/34

(54) **A SUPPORT SYSTEM OF A WIPER MECHANISM FOR A CURVED WINDSCREEN OF A VEHICLE**

(71) Applicant: VOLVO TRUCK CORPORATION, 405 08 Göteborg (SE)
(72) Inventor: SHAMANAIK, Bharat, 577548 KADUR (IN); POOJARA, Vishwa, 380059 AHMEDABAD (IN); SOMI KRISHNAMOORTHY, Abhishek Durai, 560075 BENGALURU (IN)
(74) Representative: Lavoix

(57) **Abstract**

A support system (30) of a wiper mechanism (15) for a curved windscreen (10) of a vehicle (1) comprising a first linkage part (35) and rotating to generate a wiping movement of a wiper arm (80), a second linkage part (55) coupled to the first linkage part and rotating in relation to the first linkage part. The wiper arm is coupled to the second linkage part, supports a wiper (125) and rotates in relation to the second linkage part. The support system comprises an elastically deformable element (110), coupled to the first linkage part and the second linkage part. The elastically deformable element applies a first torque rotating the second linkage part with respect to the first linkage part, when the wiper of the wiper mechanism is on a curved surface portion (25) of the windscreen, otherwise there is no rotation on a flat surface portion (20) of the windscreen.

## Description

### TECHNICAL FIELD

The disclosure relates generally to wiper mechanism of vehicle. In particular aspects, the disclosure relates to a support system of a wiper mechanism for a curved windscreen. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

The heavy-duty vehicle has often windscreen comprising curved sides. Ordinary wiper mechanisms are not adapted to wipe the curved portion of the windscreen. Thus, in case of rain, the visibility of the driver is reduced. Therefore, the safety of the driver and the other people around the vehicle is limited.

### SUMMARY

According to a first aspect of the disclosure, a support system of a wiper mechanism for a curved windscreen of a vehicle comprises:
- a first linkage part defining a wiping axis and adapted to be rotated around the wiping axis so as to generate a wiping movement of a wiper arm with respect to the windscreen,
- a second linkage part functionally coupled to the first linkage part and configured to rotate in relation to the first linkage part around a first linkage axis,
- the wiper arm functionally coupled to the second linkage part on an extremity of the wiper arm, supporting a wiper of the wiper mechanism on another extremity of the wiper arm and configured to rotate in relation to the second linkage part around a second linkage axis,
- an elastically deformable element, functionally coupled to the first linkage part and the second linkage part so that the elastically deformable element is adapted to apply a first torque rotating the second linkage part with respect to the first linkage part around the first linkage axis, when the wiper of the wiper mechanism is on a curved surface portion of the windscreen, otherwise there is no rotation on a flat surface portion of the windscreen.

The first aspect of the disclosure may seek to wipe a curved windscreen. A technical benefit may include pressing the wiper arm against the windscreen. The wiper arm follows the curve of the windscreen and ensures a wiping of the curve portion of the windscreen.

Optionally in some examples, including in at least one preferred example, the elastically deformable element is a preload torsion spring. A technical benefit may include reducing the place taken by the support system. Moreover, the torsion spring only generates a torque around the first linkage axis so that the rotation of the second linkage part with respect to the first linkage part does not generate intern stress that could damage the linkage parts.

Optionally in some examples, including in at least one preferred example, the first torque is calculated as a function of a length and a weight of the support system and the torsional stiffness of the elastically deformable element is comprised between 8 Nmm/deg and 12 Nmm/deg and is preferably equal to 10 Nmm/deg. A technical benefit may include improving the first torque of the torsion spring and improving the place requirements for the support system.

Optionally in some examples, including in at least one preferred example, the first linkage part has a substantially angled shape and the second linkage part has a substantially angled shape, one linear part of the angled shape of each of the first linkage part and the second linkage part being connected together by a link forming the first linkage axis. A size of the linear part of the second linkage part is smaller than a size of linear part of the first linkage part. The size of linear part of the second linkage part is smaller than one quarter of the size of the linear part of the first linkage part. A technical benefit may include improving the conversion of the torsional energy from the torsion spring to linear force on the windscreen.

Optionally in some examples, including in at least one preferred example, the angle shape of the second linkage part has a radius of curvature comprised between 8 millimeter and 12 millimeter. A technical benefit may include improving the structural stability of the mechanism, as the distance from the wiper to first linkage axis is shorter.

Optionally in some examples, including in at least one preferred example, the second linkage axis extends predominantly perpendicular to the wiping axis and perpendicular to the second linkage axis . A technical benefit may include ensuring that the wiper arm follows the curve of the windscreen.

Optionally in some examples, including in at least one preferred example, the support system comprises a spring comprising a first extremity assembled with the wiper arm and a second extremity assembled with the second linkage part so that the spring is adapted to apply a second torque rotating the wiper arm with respect to the second linkage part around the second linkage axis. A technical benefit may include improving the pressure of wiper against the windscreen by rotating the wiper arm towards the windscreen.

According to a second aspect of the disclosure, a wiper mechanism for a curved windscreen of a vehicle comprises:
- a support system as defined above,
- a wiper connected to the wiper arm, the wiper being secured in rotation with the wiper arm around the first and second linkage axis, and
- a displacement system connected to the first linkage part and configured to rotate the support system and the wiper around the wiping axis.

The second aspect of the disclosure may seek to wipe a curved windscreen. A technical benefit may include pressing the wiper against the windscreen. The wiper follows the curve of the windscreen and ensures a wiping of the curve portion of the windscreen.

According to a third aspect of the disclosure, a vehicle comprises a curved windscreen and at least one wiper mechanism as defined above, wherein the wiper mechanism is configured to wipe the curved windscreen and the first torque applied by the elastically deformable element presses the wiper against the curved windscreen. The curved windscreen comprises a curved surface portion and the wiper mechanism is adapted to:
- move the wiper over the curved surface portion during a wiping stroke of the wiper, and
- press the wiper against the windscreen when the wiper is moved over the curved surface portion

When the wiper of the wiper mechanism is on the curved surface portion of the windscreen, the second linkage part rotates in relation to the first linkage part through an angle comprised between 15° and 35°.

The third aspect of the disclosure may seek to wipe a curved windscreen. A technical benefit may include pressing the wiper against the windscreen. The wiper follows the curve of the windscreen and ensures a wiping of the curve portion of the windscreen.

The disclosed aspects, examples, and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

### BRIEF DESCRIPTION OF THE DRAWINGS

Examples are described in more details below with reference to the appended drawings.
**FIG. 1** is a schematic view of a vehicle according to an embodiment of the invention.
**FIG. 2** is a front view of a windscreen and a wiper mechanism of figure 1, the wiper mechanism being in an initial position.

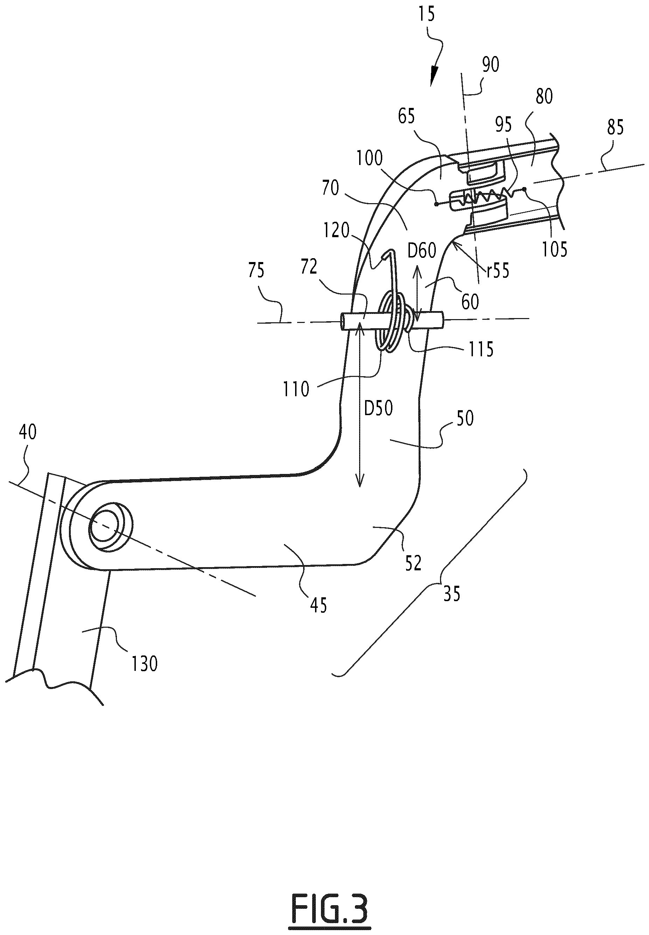

**FIG. 3** is a rear view of the frame III of Figure 2 at a bigger scale.

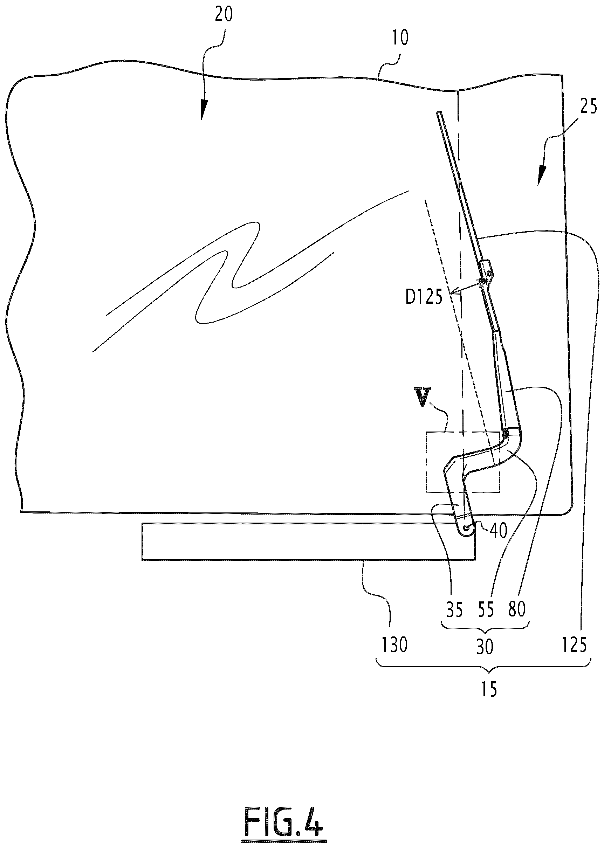

**FIG. 4** is a view similar to figure 2, the wiper mechanism being in a final position.
**FIG. 5** is a view of the frame V of Figure 4 at a bigger scale.

### DETAILED DESCRIPTION

The detailed description set forth below provides information and examples of the disclosed technology with sufficient detail to enable those skilled in the art to practice the disclosure.

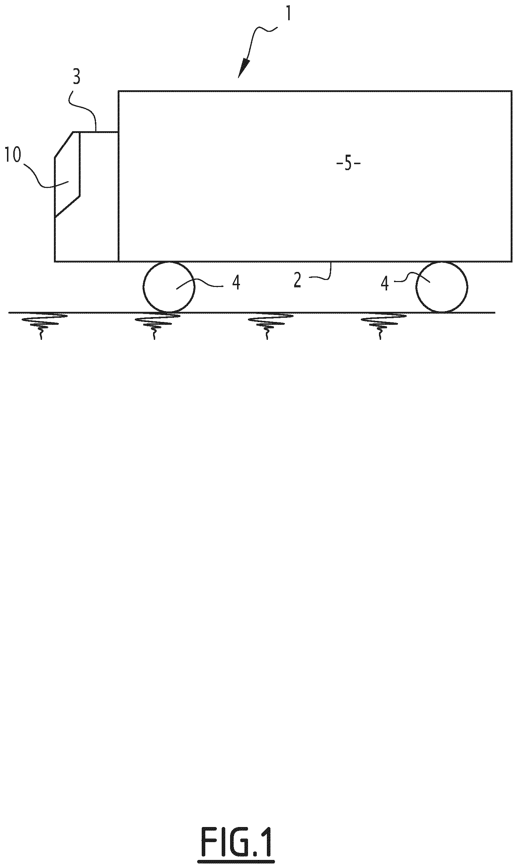

Figure 1 depicts a vehicle 1, comprising a frame 2, a driving cabin 3, wheels 4, and a load compartment 5, according to an embodiment of the invention.

The driving cabin 3 is supported by the frame 2 and positioned at the front of the vehicle 1. The vehicle 1 is drivable by a driver. The driver inside the driving cabin 3 controls the vehicle 1.

The wheels 4 are mounted on the frame 2 and configured to rotate to enable the movement of the vehicle 1 on a road 6.

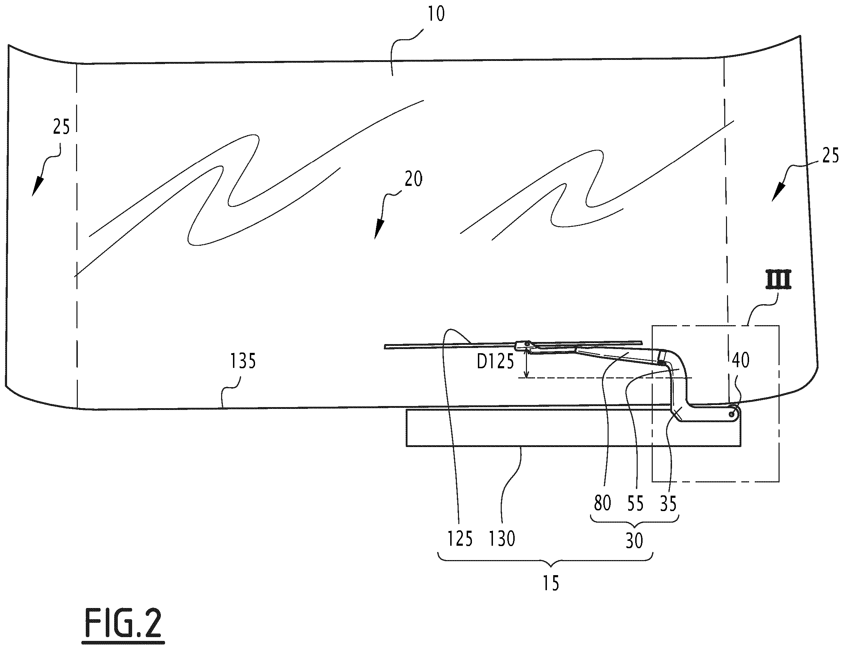

The driving cabin 3 comprises a windscreen 10 and a wiper mechanism 15, as shown in Figure 2. The windscreen 10 comprises a flat surface portion 20 and, advantageously, two curved surface portions 25. The flat surface portion 20 extends between the two curved surface portions 25.

The wiper mechanism 15 is configured to wipe the windscreen 10, more precisely, the wiper mechanism 15 is adapted to wipe, among others, the curved surface portions 25.

The wiper mechanism 15 comprises a support system 30. The support system 30 comprises a first linkage part 35.

The first linkage part 35 defines a wiping axis 40 and is adapted to be rotated with respect to the windscreen 10 around the wiping axis 40. The wiping axis 40 is, in this example, perpendicular to the flat surface portion 20. The first linkage part 35 is rotated around the wiping axis 40 to generate a wiping movement of the support system 30 with respect to the windscreen.

The first linkage part 35 has, advantageously, a substantially angled shape. More precisely, the first linkage part 35 comprises a first linear part 45, a second linear part 50 and a first bend part 52. The first bend part 52 connects the first linear part 45 to the second linear part 50 in order to form an angle, which is approximately equal to 90°C, between the first linear part 45 and the second linear part 50.

The support system 30 comprises a second linkage part 55. The second linkage part 55 has a substantially angled shape. More precisely, the first linkage part 35 comprises a third linear part 60, a fourth linear part 65 and a second bend part 70. The second bend part 70 connects the third linear part 60 to the fourth linear part 65 in order to form an angle, which is approximately equal to 90°C, between the fourth linear part 65 and the second bend part 70.

The second linkage part 55 is assembled with the first linkage part 35. More precisely, the second linear part 50 is connected to the third linear part 60 by a link 72 perpendicular to the second linear part 50 and the third linear part 60, the link 72 forming a first linkage axis 75. The second linear part 50 is connected to the third linear part 60 so that the third linear part 60 is in the continuation of the second linear part 35. In other words, the second linear part 60 is functionally coupled to the first linkage part 35. The second linkage part 55 is configured to rotate in relation to the first linkage part 35 around the first linkage axis 75.

Advantageously, a size D60 of the third linear part 60, measured parallel to the third linear part 60 between the link 72 and the second bend part 70, is smaller than a size D50 of the second linear part 50, measured parallel to the second linear part 50 between the link 72 and the first bend part 52. In other words, the size D60 is the length of the third linear part 60 and the size D50 is the length of the second linear part 50. Advantageously, the size D60 is smaller than one quarter of the size D50.

Advantageously, the second linkage part 55, more precisely the second bend part 70, has a radius of curvature r55 comprised between 8 millimeter and 12 millimeter.

The first linkage axis 75 is substantially perpendicular to the wiping axis 40. In other words, the first linkage axis 75 is substantially parallel to the flat surface portion 20 of the windscreen 10. In other words, the first linkage axis 75 does not intersect the flat surface portion 20 or intersects the flat surface portion 20 with an angle below than 10°.

The support system 30 comprises a wiper arm 80. The wiper arm 80 extends substantially along a wiper arm axis 85.The wiper arm 80 is functionally coupled to the second linkage part 55. In other words, the wiper arm 80 is carried by the second linkage part 55. More precisely, an extremity of the wiper arm 80 is connected to the fourth linear part 65, the wiper arm 80 being in the continuation of the fourth linear part 65. Thus, the wiper arm axis 85 is substantially perpendicular to the wiping axis 40. The wiper arm 80 is configured to rotate in relation to the second linkage part 55 around a second linkage axis 90.

Advantageously, the second linkage axis 90 extends predominantly perpendicular to the wiping axis 40 and perpendicular to the first linkage axis 75. More precisely, the second linkage axis 90 is predominantly perpendicular to a plan comprising the wiping axis 40. In other words, the second linkage axis 90 intersects an axis of the plan comprising the wiping axis 40 and forms with this axis an angle comprised between 70° and 110° and preferably equal to 90°. Moreover, the second linkage axis 90 is predominantly perpendicular to another plan comprising the first linkage axis 75. In other words, the second linkage axis 90 intersects another axis of the another plan comprising the first linkage axis 75 and forms with this another axis an angle comprised between 70° and 110° and preferably equal to 90°.

The support system 30 comprises an elastically deformable element 110. A first extremity 115 of the elastically deformable element 110 is assembled with the first linkage part 35 and a second extremity 120 of the elastically deformable element 110 is assembled with the second linkage part 55. Thus, the elastically deformable element 110 is functionally coupled to the first linkage part 35 and the second linkage part 55.

The elastically deformable element 110 is adapted to apply a first torque rotating the second linkage part 55 with respect to the first linkage part 35 around the first linkage axis 75.

The elastically deformable element 110 is, advantageously, a preload torsion spring.

Advantageously, the first torque is calculated as a function of a length and a weight of the support system 30, more precisely as a function of a length and a weight of the first linkage part 35 and the second linkage part 55.

Advantageously, the torsional stiffness of the elastically deformable element 110 is comprised between 8 Nmm/deg and 12 Nmm/deg and is preferably equal to 10 Nmm/deg.

Advantageously, the support system 30 comprises a spring 95. The spring 95 comprises a first extremity 100 assembled with the wiper arm 80 and a second extremity 105 assembled with the second linkage part 55. The spring 95 is adapted to apply a second torque, which rotates the wiper arm 80 with respect to the second linkage part 55 around the second linkage axis 90.

The wiper mechanism 15 comprises a wiper 125. The wiper 125 is connected to the wiper arm 80.More precisely the wiper 125 is connected to another extremity of the wiper arm 80, the another extremity being not connected to the second linkage part 55. In this example, the wiper 125 extends substantially parallel to the wiper arm axis 85. The wiper 125 is secured in rotation with the wiper arm 80 around the first and second linkage axis 75 and 90. In other words, when the wiper arm rotates around the first and second linkage axis 75 and 90, the wiper 125 is drived in rotation around the first and second linkage axis 75 and 90.

The wiper mechanism 15 comprises a displacement system 130 connected to the first linkage part 35 and configured to rotate the support system 30 and the wiper 125 about the wiping axis 40. The displacement system 130 comprises a motor, not represented, and a transmission, not represented. The motor drives in rotation the transmission and the transmission drives in rotation around the wiping axis 40 the support system 30 between an initial position to a final position so that the wiper mechanism 15 is adapted to move the wiper 125 over the curved surface portion 25 during a wiping stroke of the wiper 125, the wiping stroke corresponding of a rotation of the support system 30 from the initial position to the final position.

In the initial position, the wiper arm 80 is substantially parallel to a lower side 135 of the windscreen 10 and the wiper is positioned on the flat surface portion 20. When the support system 30 is in the initial position, the support system 30, more precisely the wiper arm 80, is substantially parallel to the flat portion surface 20 and the spring 95 applied the second torque to rotate the wiper arm 80 towards the windscreen 10 to press the wiper 125 against the windscreen 10.

In the final position, the wiper arm 80 is substantially perpendicular to a lower side 135 of the windscreen 10 and the wiper 125 is positioned on the curved surface portion 25.

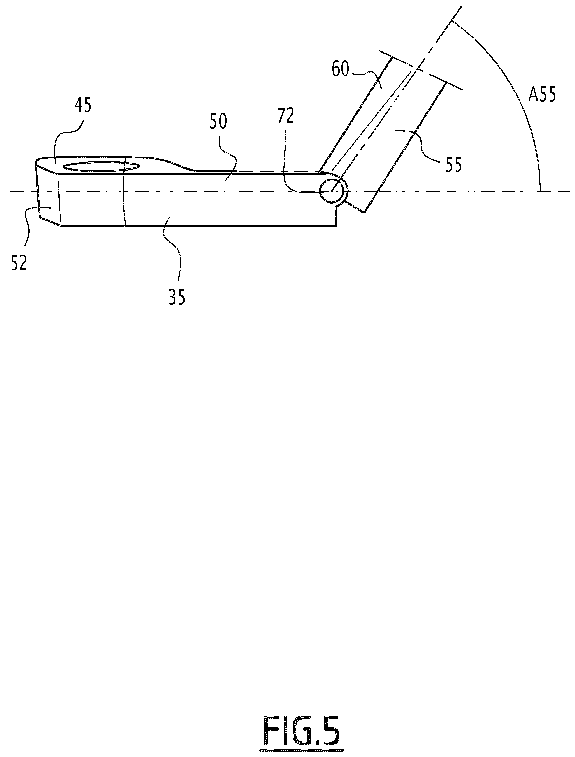

When the support system 30 is rotated from the initial position to the final position, the wiper 125 goes from the flat surface portion 20 to the curved surface portion 25. When the wiper 125 goes from the flat surface portion 20 to the curved surface portion 25, the spring 95 is not enough to press the wiper 125 against the windscreen 10 and the preloaded torsion spring 110 applies a first torque to rotate the second linkage part 55 with respect to the first linkage part 35 around the first linkage axis 75, as represented on figure 5. The rotation of the second linkage part 55 around the second linkage axis 75 enables that the wiper 125 is pressed against the windscreen 10 on the curved surface portion 25. Thus, the wiper mechanism 15 presses the wiper 125 against the windscreen 10 also when the wiper 125 is moved over the curved surface portion 25.

Advantageously, when the wiper 125 of the wiper mechanism 15 is on the curved surface portion 25 of the windscreen 10, the second linkage part 55 rotates in relation to the first linkage part 35 through an angle A55, measured between the second linear part 50 and the third linear part 60, comprised between 15° and 35°.

Due to the geometry of the windscreen, thanks to the preloaded torsion spring 110 a contact between the wiper 125 and the curved surface portion 25 is perpendicular to the curved surface portion 25. Thus, thanks to the preloaded torsion spring 110, the contact between the wiper 125 and the windscreen 10 is always perpendicular to the windscreen 10 during the wiping stroke of the wiper 125 so that the wiping of the windscreen is efficient during all the wiping stroke. In other words, without the preloaded torsion spring 110, the wiping of the curved surface portion 25 is not efficient.

Thanks to the radius of curvature r55 of the second bend part 70, a distance D125, measured perpendicularly to the first linkage axis 75 between the link 72 and the wiper 125, is short so that the mechanism is stable and the conversion of the torsional energy from the torsion spring to linear force on the windscreen is improved. The conversion of the torsional energy from the torsion spring to linear force on the windscreen is also improved by the difference between the size D50 and D60.

When the support system 30 is rotated from the final position to the initial position, the wiper 125 goes from the curved surface portion 25 to the flat surface portion 20. When the wiper 125 goes from the curved surface portion 25 to the flat surface portion 20, the contact between the wiper 125 and the flat surface portion 20 generates a third torque between the second linkage part 55 and the first linkage part 35 around the first linkage axis 75. The third torque compensates the first torque of the preload torsion spring and rotates the second linkage part 55 with respect to the first linkage part 35 around the first linkage axis 75 so that the third linear part 60 is in the continuation of the second linear part 35. In other words, there is no rotation between the first linkage part 35 and the second linkage part 55 when the wiper 125 is on the flat surface portion 20.

The shape of the first linkage part 35 and the second linkage part 55 enables an offset of the wiper 125 regarding the lower side 135. Indeed, it is more interesting to wipe the higher part of the windscreen 10 since it is the part of the windscreen 10 in front of the eyes of the driver. The shape of the first linkage part 35 and the second linkage part 55 depends of the vehicle 1 and the windscreen 10 and is adapted to optimize the place taken by the first linkage part 35 and the second linkage part 55.

The orientation of the first linkage axis 75 against the wiping axis 40 and the orientation of the second linkage axis 90 against the wiping axis 40 and first linkage axis 75 enable an adjustment of the position of the wiper 125 whatever the shape of the windscreen 10.

**Example 1:** A support system 30 of a wiper mechanism 15 for a curved windscreen 10 of a vehicle 1 comprising:
- a first linkage part 35 defining a wiping axis 40 and adapted to be rotated around the wiping axis 40 so as to generate a wiping movement of a wiper arm 80 with respect to the windscreen 10,
- a second linkage part 55 functionally coupled to the first linkage part 35 and configured to rotate in relation to the first linkage part 35 around a first linkage axis 75,
- the wiper arm 80 functionally coupled to the second linkage part 55 on an extremity of the wiper arm 80, supporting a wiper 125 of the wiper mechanism 15 on another extremity of the wiper arm 80 and configured to rotate in relation to the second linkage part 55 around a second linkage axis 90,

an elastically deformable element 110, functionally coupled to the first linkage part 35 and the second linkage part 55 so that the elastically deformable element 110 is adapted to apply a first torque rotating the second linkage part 55 with respect to the first linkage part 35 around the first linkage axis 75, when the wiper 125 of the wiper mechanism 15 is on a curved surface portion 25 of the windscreen 10, otherwise there is no rotation on a flat surface portion 20 of the windscreen 10.

**Example 2:** The support system 30 of example 1, wherein the elastically deformable element 110 is a preload torsion spring.

**Example 3:** The support system 30 of any one of the preceding example, wherein the first torque is calculated as a function of a length and a weight of the support system.

**Example 4:** The support system 30 of any one of the preceding example, wherein the torsional stiffness of the elastically deformable element 110 is comprised between 8 Nmm/deg and 12 Nmm/deg and is preferably equal to 10 Nmm/deg .

**Example 5:** The support system 30 of any one of the preceding example, wherein the first linkage part (35) has a substantially angled shape and the second linkage part (55) has a substantially angled shape, one linear part (50, 60) of the angled shape of each of the first linkage part (35) and the second linkage part (55) being connected together by a link (72) forming the first linkage axis.

**Example 6:** The support system 30 of the example 5, wherein a size D60 of the linear part 60 of the second linkage part 55 is smaller than a size D50 of linear part 50 of the first linkage part 35.

**Example 7:** The support system 30 of the example 6, wherein the size D60 of linear part 60 of the second linkage part 55 is smaller than one quarter of the size D50 of the linear part 50 of the first linkage part 35.

**Example 8:** The support system 30 of any one of the example 5 to 7, wherein the angle shape of the second linkage part 55 has a radius of curvature r55 comprised between 8 millimeter and 12 millimeter.

**Example 9:** The support system 30 of any one of the preceding example, wherein the second linkage axis 75 extends predominantly perpendicular to the wiping axis 40 and perpendicular to the second linkage axis 90.

**Example 10:** The support system 30 of any one of the preceding example, comprising a spring 95 comprising a first extremity 100 assembled with the wiper arm 80 and a second extremity 105 assembled with the second linkage part 55 so that the spring 95 is adapted to apply a second torque rotating the wiper arm 80 with respect to the second linkage part 55 around the second linkage axis 90.

**Example 11:** A wiper mechanism 15 for a windscreen 10 of a vehicle 1 comprising:
- a support system 30 of any one of the preceding example, and
- a wiper 125 connected to the wiper arm 80, the wiper 125 being secured in rotation with the wiper arm 80 around the first 75 and second linkage axis 90.

**Example 12:** The wiper mechanism 15 of the example 11, comprising a displacement system 130 connected to the first linkage part 35 and configured to rotate the support system 30 and the wiper 125 around the wiping axis 40.

**Example 13:** A vehicle 1 comprising a windscreen 10 and at least one wiper mechanism 15 of any one of the example 11 or 12, wherein the wiper mechanism 15 is configured to wipe the curved windscreen 10 and the first torque applied by the elastically deformable element 110 pressing the wiper 125 against the windscreen 10.

**Example 14:** The vehicle 1 of the example 13, wherein the curved windscreen 10 comprises a curved surface portion 25 and the wiper mechanism 15 is adapted to :
- move the wiper 125 over the curved surface portion 25 during a wiping stroke of the wiper 125, and
- press the wiper 125 against the windscreen 10 when the wiper 125 is moved over the curved surface portion 25.

**Example 15:** The vehicle 1 of the example 14, wherein when the wiper 125 of the wiper mechanism 15 is on the curved surface portion 25 of the windscreen 10, the second linkage part 55 rotates in relation to the first linkage part 35 through an angle A55 comprised between 15° and 35°.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A support system (30) of a wiper mechanism (15) for a curved windscreen (10) of a vehicle (1) comprising:
- a first linkage part (35) defining a wiping axis (40) and adapted to be rotated around the wiping axis (40) so as to generate a wiping movement of a wiper arm (80) with respect to the windscreen (10),
- a second linkage part (55) functionally coupled to the first linkage part (35) and configured to rotate in relation to the first linkage part (35) around a first linkage axis (75),
- the wiper arm (80) functionally coupled to the second linkage part (55) on an extremity of the wiper arm (80), supporting a wiper (125) of the wiper mechanism (15) on another extremity of the wiper arm (80) and configured to rotate in relation to the second linkage part (55) around a second linkage axis (90),
- an elastically deformable element (110), functionally coupled to the first linkage part (35) and the second linkage part (55) so that the elastically deformable element (110) is adapted to apply a first torque rotating the second linkage part (55) with respect to the first linkage part (35) around the first linkage axis (75), when the wiper (125) of the wiper mechanism (15) is on a curved surface portion (25) of the windscreen (10), otherwise there is no rotation on a flat surface portion (20) of the windscreen (10).

2. The support system (30) according to claim 1, wherein the elastically deformable element (110) is a preload torsion spring.

3. The support system (30) according to any one of the preceding claims, wherein the first torque is calculated as a function of a length and a weight of the support system (30).

4. The support system (30) according to any one of the preceding claims, wherein the torsional stiffness of the elastically deformable element (110) is comprised between 8 Nmm/deg and 12 Nmm/deg and is preferably equal to 10 Nmm/deg.

5. The support system (30) according to any one of the preceding claims, wherein the first linkage part (35) has a substantially angled shape and the second linkage part (55) has a substantially angled shape, one linear part (50, 60) of the angled shape of each of the first linkage part (35) and the second linkage part (55) being connected together by a link (72) forming the first linkage axis (75).

6. The support system (30) according to claim 5, wherein a size (D60) of the linear part (60) of the second linkage part (55) is smaller than a size (D50) of linear part (50) of the first linkage part (35).

7. The support system (30) according to claim 6, wherein the size (D60) of linear part (60) of the second linkage part (55) is smaller than one quarter of the size (D50) of the linear part (50) of the first linkage part (35).

8. The support system (30) according to any one of the claims 5 to 7, wherein the angle shape of the second linkage part (55) has a radius of curvature (r55) comprised between 8 millimeter and 12 millimeter.

9. The support system (30) according to any one of the preceding claims, wherein the second linkage axis (75) extends predominantly perpendicular to the wiping axis (40) and perpendicular to the second linkage axis (90).

10. The support system (30) according to any one of the preceding claims comprising a spring (95) comprising a first extremity (100) assembled with the wiper arm (80) and a second extremity (105) assembled with the second linkage part (55) so that the spring (95) is adapted to apply a second torque rotating the wiper arm (80) with respect to the second linkage part (55) around the second linkage axis (90).

11. A wiper mechanism (15) for a curved windscreen (10) of a vehicle (1) comprising:
- a support system (30) according to any one of the preceding claims, and
- a wiper (125) connected to the wiper arm (80), the wiper (125) being secured in rotation with the wiper arm (80) around the first (75) and second linkage axis (90).

12. The wiper mechanism (15) according to claim 11 comprising a displacement system (130) connected to the first linkage part (35) and configured to rotate the support system (30) and the wiper (125) around the wiping axis (40).

13. A vehicle (1) comprising a curved windscreen (10) and at least one wiper mechanism (15) according to any one of the claims 11 or 12, wherein the wiper mechanism (15) is configured to wipe the curved windscreen (10) and the first torque applied by the elastically deformable element (110) presses the wiper (125) against the curved windscreen (10).

14. The vehicle (1) according to the previous claim, wherein the curved windscreen (10) comprises a curved surface portion (25) and the wiper mechanism (15) is adapted to:
- move the wiper (125) over the curved surface portion (25) during a wiping stroke of the wiper (125), and
- press the wiper (125) against the windscreen (10) when the wiper (125) is moved over the curved surface portion (25).

15. The vehicle (1) according to claims 14, wherein when the wiper (125) of the wiper mechanism (15) is on the curved surface portion (25) of the windscreen (10), the second linkage part (55) rotates in relation to the first linkage part (35) through an angle (A55) comprised between 15° and 35°.

## Amended claims

### Amended claims in accordance with Rule 137(2) EPC.

1. A support system (30) of a wiper mechanism (15) for a curved windscreen (10) of a vehicle (1) comprising:
- a first linkage part (35) defining a wiping axis (40) and adapted to be rotated around the wiping axis (40) so as to generate a wiping movement of a wiper arm (80) with respect to the windscreen (10), the first linkage part (35) having a substantially angled shape,
- a second linkage part (55) functionally coupled to the first linkage part (35) and configured to rotate in relation to the first linkage part (35) around a first linkage axis (75), the second linkage part (55) having a substantially angled shape, one linear part (50, 60) of the angled shape of each of the first linkage part (35) and the second linkage part (55) being connected together by a link (72) forming the first linkage axis (75),
- the wiper arm (80) functionally coupled to the second linkage part (55) on an extremity of the wiper arm (80), supporting a wiper (125) of the wiper mechanism (15) on another extremity of the wiper arm (80) and configured to rotate in relation to the second linkage part (55) around a second linkage axis (90),
- an elastically deformable element (110), functionally coupled to the first linkage part (35) and the second linkage part (55) so that the elastically deformable element (110) is adapted to apply a first torque rotating the second linkage part (55) with respect to the first linkage part (35) around the first linkage axis (75), when the wiper (125) of the wiper mechanism (15) is on a curved surface portion (25) of the windscreen (10), otherwise there is no rotation on a flat surface portion (20) of the windscreen (10), and
wherein a size D60 of the linear part (60) of the second linkage part (55) is smaller than a size D50 of the linear part (50) of the first linkage part (35), the size D60 being the length of the linear part (60) of the second linkage part (55) and the size D50 being the length of the linear part (50) of the first linkage part (35), the size D60 of the linear part (60) of the second linkage part (55) being smaller than one quarter of the size D50 of the linear part (50) of the first linkage part (35).

2. The support system (30) according to claim 1, wherein the elastically deformable element (110) is a preload torsion spring.

3. The support system (30) according to any one of the preceding claims, wherein the first torque is calculated as a function of a length and a weight of the support system (30).

4. The support system (30) according to any one of the preceding claims, wherein the torsional stiffness of the elastically deformable element (110) is comprised between 8 Nmm/deg and 12 Nmm/deg and is preferably equal to 10 Nmm/deg.

5. The support system (30) according to any one of the previous claims, wherein the angle shape of the second linkage part (55) has a radius of curvature (r55) comprised between 8 millimeter and 12 millimeter.

6. The support system (30) according to any one of the preceding claims, wherein the second linkage axis (75) extends predominantly perpendicular to the wiping axis (40) and perpendicular to the second linkage axis (90).

7. The support system (30) according to any one of the preceding claims comprising a spring (95) comprising a first extremity (100) assembled with the wiper arm (80) and a second extremity (105) assembled with the second linkage part (55) so that the spring (95) is adapted to apply a second torque rotating the wiper arm (80) with respect to the second linkage part (55) around the second linkage axis (90).

8. A wiper mechanism (15) for a curved windscreen (10) of a vehicle (1) comprising:
- a support system (30) according to any one of the preceding claims, and
- a wiper (125) connected to the wiper arm (80), the wiper (125) being secured in rotation with the wiper arm (80) around the first (75) and second linkage axis (90).

9. The wiper mechanism (15) according to claim 8 comprising a displacement system (130) connected to the first linkage part (35) and configured to rotate the support system (30) and the wiper (125) around the wiping axis (40).

10. A vehicle (1) comprising a curved windscreen (10) and at least one wiper mechanism (15) according to any one of the claims 8 or 9, wherein the wiper mechanism (15) is configured to wipe the curved windscreen (10) and the first torque applied by the elastically deformable element (110) presses the wiper (125) against the curved windscreen (10).

11. The vehicle (1) according to the previous claim, wherein the curved windscreen (10) comprises a curved surface portion (25) and the wiper mechanism (15) is adapted to:
- move the wiper (125) over the curved surface portion (25) during a wiping stroke of the wiper (125), and
- press the wiper (125) against the windscreen (10) when the wiper (125) is moved over the curved surface portion (25).

12. The vehicle (1) according to claim 11, wherein when the wiper (125) of the wiper mechanism (15) is on the curved surface portion (25) of the windscreen (10), the second linkage part (55) rotates in relation to the first linkage part (35) through an angle (A55) comprised between 15° and 35°.
